Europäisches Patentamt

European Patent Office

Office européen des brevets

(19)

(11) Numéro de publication: **0 249 522**
**B1**

# FASCICULE DE BREVET EUROPEEN

(45) Date de publication du fascicule du brevet:
24.01.90

(51) Int. Cl.⁴: **F16D 65/56**

(21) Numéro de dépôt: **87401193.5**

(22) Date de dépôt: **27.05.87**

(54) **Moteur de frein à réglage automatique.**

(30) Priorité: **12.06.86 FR 8608503**

(43) Date de publication de la demande:
**16.12.87 Bulletin 87/51**

(45) Mention de la délivrance du brevet:
**24.01.90 Bulletin 90/4**

(84) Etats contractants désignés:
**DE ES GB IT**

(56) Documents cités:
**EP-A- 0 053 548**
**EP-A- 0 175 600**
**DE-A- 2 131 053**
**DE-A- 3 136 958**
**DE-B- 2 113 317**
**FR-A- 1 535 731**
**FR-A- 2 262 230**
**GB-A- 1 206 276**
**US-A- 4 306 635**

(73) Titulaire: **BENDIX France, 126, rue de Stalingrad,
F-93700 Drancy(FR)**

(72) Inventeur: **Fabbro, Edgard, 32, rue Ernest André,
F-78110 Le Vesinet(FR)**
Inventeur: **Pressaco, Pierre, 45, rue Emile Zola, bât C,
F-93120 La Courneuve(FR)**

(74) Mandataire: **Lejet, Christian et al, BENDIX FRANCE
Division Technique Service Brevets Bendix
Europe 126 rue de Stalingrad, F-93700 Drancy(FR)**

ACTORUM AG

## Description

La présente invention concerne les moteurs de frein à réglage automatique, notamment mais non exclusivement pour freins à disque de véhicule, du type comprenant un piston de frein coulissant dans un corps pour l'actionnement d'au moins un organe de friction, un dispositif de réglage automatique du type à vis/écrou à pas réversible comportant un organe immobilisé en rotation associé à un organe rotatif accompagnant, en fonctionnement, le déplacement axial du piston de frein pour le rattrapage des jeux résultant de l'usure de l'organe de friction, l'organe rotatif comportant une extrémité s'étendant dans le piston de frein, au voisinage d'une paroi frontale de celui-ci coopérant avec l'organe de friction, et étant accouplable, pour être immobilisé en rotation, au piston de frein par un moyen d'embrayage; et un insert monté de façon étanche dans un passage traversant formé dans la paroi frontale du piston de frein, l'insert ayant une extrémité intérieure susceptible de coopérer avec ladite extrémité de l'organe rotatif pour solliciter axialement ce dernier afin de réinitialiser le dispositif de réglage automatique en réponse à un effort axial appliqué sur une extrémité extérieure de l'insert.

Un moteur de frein de ce type est décrit dans le document DE-A-21 13 317. Dans ce document, l'insert est constitué d'un ensemble d'une bille et de deux disques montés dans une portion intérieure de diamètre élargi du passage traversant débouchant vers l'extérieur par une portion de petit diamètre permettant l'insertion axiale d'un outil d'actionnement pour réinitialiser le dispositif de réglage automatique en exerçant sur l'insert et, partant, sur l'organe rotatif du dispositif de réglage automatique, une poussée purement axiale. Du fait de l'accouplement via le moyen d'embrayage, en l'occurence par friction cône sur cône, entre l'organe rotatif et le piston de frein, la réinitialisation nécessite d'exercer sur l'insert, via l'outil d'actionnement, une force axiale initiale très importante pour vaincre ledit accouplement par conversion de l'effort axial en mouvement de rotation de l'organe rotatif résultant de son engrènement à pas réversible avec l'organe non rotatif du dispositif de réglage automatique, ce qui pose des problèmes pratiques compte tenu de l'accessibilité parfois malaisée à la portion extérieure du passage traversant et peut se 10 traduire par un endommagement de l'insert et/ou de l'organe rotatif.

La présente invention a pour objet de proposer des perfectionnements au moteur de frein du type considéré permettant d'effectuer plus aisément et plus sûrement la réinitialisation et offrant en outre la possibilité de nombreuses adaptations permettant la réalisation de moteurs de frein performants et fiables.

Pour ce faire, selon une caractéristique de l'invention, l'insert est constitué sous la forme d'un piston coulissant dans une portion cylindrique du passage traversant et comporte une extrémité extérieure formant une tête arrondie, le passage formant, dans la paroi du piston de frein, du côté de l'organe de friction, une surface de contre-appui faisant face vers la portion de passage cylindrique.

Selon une caractéristique plus particulière de l'invention, la surface de contre-appui est formée par une gorge annulaire de diamètre élargi dans laquelle débouche extérieurement la portion de passage cylindrique recevant l'insert piston.

Avec un tel agencement, il est ainsi possible d'insérer transversalement par rapport à l'axe du moteur de frein, en interférant donc peu avec les organes constitutifs du frein, l'extrémité d'un outil d'actionnement entre la tête arrondie de l'insert piston et la surface de contre-appui adjacente de sorte que l'application d'un couple de basculement sur l'outil provoque un déplacement axial de l'insert vers l'intérieur sollicitant en retrait l'organe rotatif, accompagné d'un déplacement axial antagoniste, vers l'extérieur, du piston de frein promouvant la libération de l'accouplement via le moyen d'embrayage entre ces deux composants, après quoi un déplacement en translation de l'outil vers l'intérieur permet à l'organe rotatif de se revisser vis-à-vis de l'organe non rotatif en repoussant concomitamment le piston de frein à l'intérieur du corps vers une position rétractée de départ convenant pour le remplacement d'un organe de friction usé par un organe de friction à garniture neuve.

La présente invention a pour autre objet de proposer un moteur de frein du type considéré comportant des moyens d'inhibition simplifiés du dispositif de réglage automatique afin d'empêcher un surréglage qui pourrait survenir en cas de déformation élastique momentanée de la structure du frein comportant le moteur de frein et résultant d'un effort de freinage important exercé sur l'organe de friction.

Pour ce faire, selon une autre caractéristique de l'invention, les moyens d'inhibition comportent un piston inhibiteur monté coulissant dans le piston de frein et coopérant avec l'organe rotatif pour en empêcher la rotation lors d'un déplacement fonctionnel du piston de frein lorsque la pression d'actionnement de ce dernier dépasse une valeur déterminé=, le piston inhibiteur étant avantageusement constitué par l'insert piston agencé d= façon à être accouplable, au moins temporairement, à l'organe rotatif du dispositif de réglage automatique.

D'autres caractéristiques et avantages de la présente invention ressortiront de la description suivante de mode de réalisation, donnés à titre illustratif mais nullement limitatif, faite en relation avec les dessins annexés, sur lesquels :

- la figure 1 est une vue schématique en coupe longitudinale d'un premier mode de réalisation d'un moteur de frein à réglage automatique selon l'invention ;
- la figure 2 est une vue similaire à la figure 1 d'un second mode de réalisation de l'invention ;
- la figure 3 est une vue partielle, en coupe, à plus grande échelle, de la figure 2, illustrant la mise en oeuvre de la réinitialisation d'un moteur de frein selon l'invention ;
- la figure 4 est une vue partielle, en coupe longitudinale, d'un troisième mode de réalisation de l'invention ; et

- la figure 5 est une vue partielle analogue à la Fig. 3 montrant une variante de l'invention.

Dans la description qui va suivre et sur les dessins, les éléments identiques ou analogues portent les mêmes chiffres de référence, éventuellement indicés.

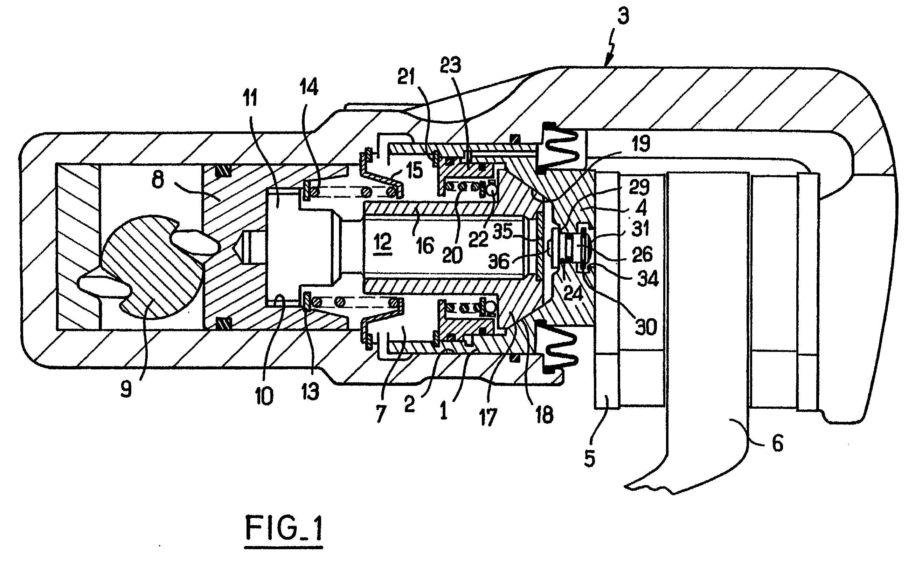

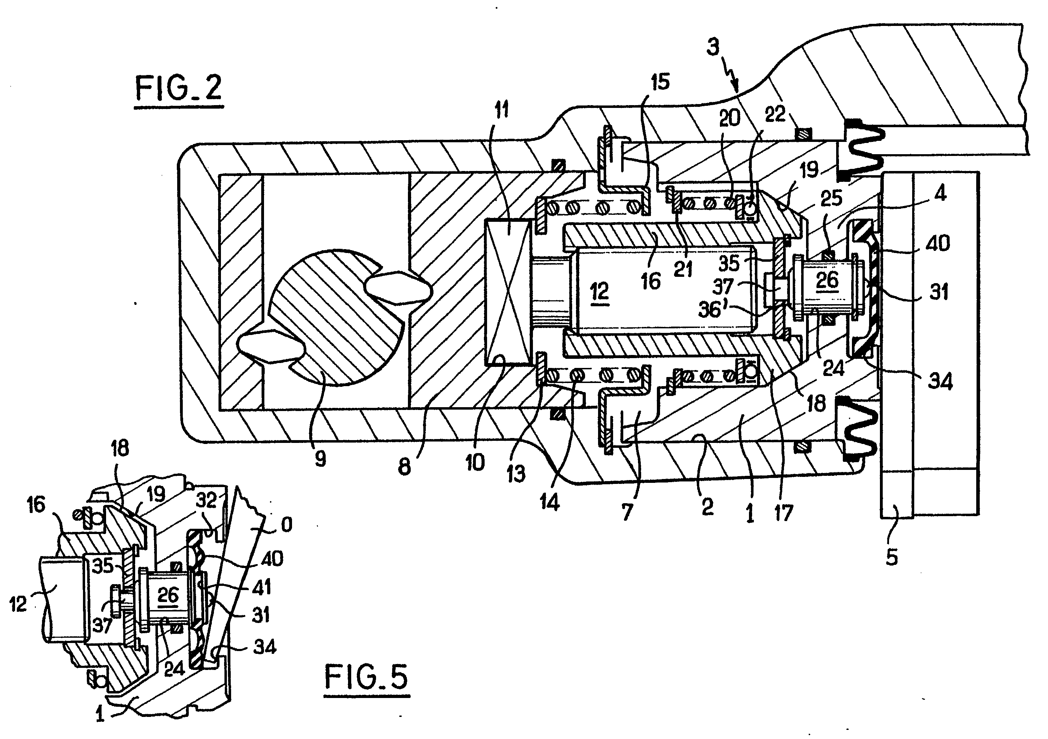

Sur les figures 1 et 2 on a représenté, à titre illustratif, un moteur de frein à disque comportant de façon générale un piston creux de frein, désigné généralement par la référence 1, monté coulissant dans un alésage 2 d'un corps de frein 3, en l'occurrence un étrier de frein à disque supporté à coulissement sur un support fixe (non représenté), le piston 1 comportant une paroi frontale d'extrémité 4 coopérant en engagement avec un organe de friction 5 pour plaquer ce dernier en engagement de friction sur un organe à freiner, en l'occurrence un disque de frein 6. Dans les modes de réalisation représentés, le piston 1 délimite, dans l'alésage 2 du corps 3, une chambre hydraulique 7 délimitée d'autre part par un piston poussoir 8 coulissant dans un= portion arrière de diamètre réduit de l'alésage 2 du corps 3 et actionnable par un actionneur mécanique 9 assurant typiquement la fonction de frein de parking. Dans les modes de réalisation des figures 1 et 2, dans un logement antérieur 10 du piston poussoir 8 est reçue l'extrémité arrière 11 élargie d'une vis filetée 12 qui s'étend vers l'avant dans la chambre 7 et à l'intérieur du piston de frein 1, le logement 10 et l'extrémité 11 présentant des profils transversaux complémentaires de façon à empêcher toute rotation autour de son axe de la vis 12. L'extrémité 11 de la vis 12 est retenue axialement, avec un jeu fonctionnel, relativement au piston poussoir 8 par une rondelle 13 formant appui arrière pour un ressort de rappel 14 coaxial à la vis 12 et prenant appui antérieur sur une collerette 15 rendue solidaire du corps 3 pour solliciter en permanence le piston poussoir 8 vers l'arrière, en engagement avec l'actionneur mécanique 9. Sur la vis 12 est engagé en coopération en engrènement à pas réversible un écrou rotatif allongé 16 comportant une extrémité avant de diamètre extérieur élargi 17 comportant une face avant 18 susceptible de coopérer en engagement de friction avec une face interne adjacente 19 du piston de frein 1. Dans les modes de réalisation représentés, les faces d'engagement 18 et 19 sont avantageusement coniques, mais, en variante, peuvent également être constituées sous la forme de faces annulaires transversales, auquel cas l'une au moins de ces faces annulaires présente une surface à haut coefficient de friction, par exemple un revêtement de matériau de friction. L'écrou 16 est sollicité vers l'avant pour amener en contact d'engagement les faces 18 et 19 par un ressort 20 disposé coaxialement autour de l'écrou 16, prenant appui postérieur sur une rondelle 21 montée dans le piston de frein 1 et appui antérieur, via une butée à billes 22, contre la face arrière de l'extrémité de diamètre élargi 17 de l'écrou 16. On comprendra que, avec un tel agencement, si, en cas d'usure de l'organe de friction 5, le piston de frein 1 doit se déplacer d'une distance supérieure aux jeux fonctionnels de la vis 12 et des filets entre cette dernière et l'écrou 16, ce complément de déplacement du piston se traduira par une séparation entre les faces 18 et 19 libérant l'accouplement entre le piston de frein 1 et l'écrou 16, cet écartement étant immédiatement compensé par rotation avec avancement vers l'avant de l'écrou 16 sur la vis 12 sous l'effet du ressort 20.

Dans le mode de réalisation de la figure 1, l'appui arrière entre le ressort 20 et la rondelle 21 est assuré via un piston étagé 23 monté à coulissement étanche dans le piston de frein 1 et déplaçable en réponse à la pression existant dans la chambre 7 pour maintenir plaquées l'une contre l'autre les surfaces 18 et 19 lorsque la pression dans la chambre 7 dépasse une valeur déterminée, le déplacement du piston de frein 1 provoquant alors, via l'écrou 16, un déplacement vers l'avant de la vis 12 à l'encontre du ressort de rappel 14.

Conformément à l'invention, dans la paroi frontale 4 du piston de frein 1 est ménagé un passage traversant comprenant, débouchant dans la chambre 7, une portion principale cylindrique 24, typiquement coaxiale à l'ensemble du piston de frein et du dispositif de réglage automatique, dans laquelle est monté à coulissement étanche, au moyen d'un joint 25, un petit insert piston cylindrique 26 faisant saillie axialement de part et d'autre de la portion de passage cylindrique 24 et comportant des moyens de butée susceptibles de coopérer avec des portions axialement opposées 27 et 28 de la paroi 4 dans lesquelles débouche la portion cylindrique 24 pour limiter le déplacement axial de l'insert piston 26, et constitués par exemple par une collerette faisant saillie radialement vers l'extérieur 29 formée par la portion du piston 26 s'étendant dans la chambre 7, et par un circlips 30 rapporté sur l'extrémité en saillie extérieure du piston 26. Cette extrémité extérieure du piston 26 forme une tête d'extrémité arrondie 31 et, dans les modes de réalisation des Figures 1 et 2, la portion de passage cylindrique 24 débouche extérieurement dans une rainure annulaire 32 de diamètre élargi débouchant elle-même vers l'extérieur par une portion d'alésage de diamètre réduit 33 en définissant ainsi une surface annulaire 34 faisant face vers l'intérieur et entourant l'extrémité extérieure de l'insert piston 26. L'extrémité intérieure de ce dernier est agencée de façon à coopérer en engagement d'appui contre une cloison frontale 35 de l'écrou 16, constituée avantageusement par une plaque rapportée intérieurement dans l'extrémité de diamètre extérieur élargi 17 de l'écrou 16.

Dans le mode de réalisation de la figure 1, comportant un piston inhibiteur 23 à l'intérieur du piston de frein 1, l'insert piston de réinitialisation 26 comporte une tête d'extrémité intérieure arrondie 36 pour réaliser un engagement en contact ponctuel avec la cloison 35.

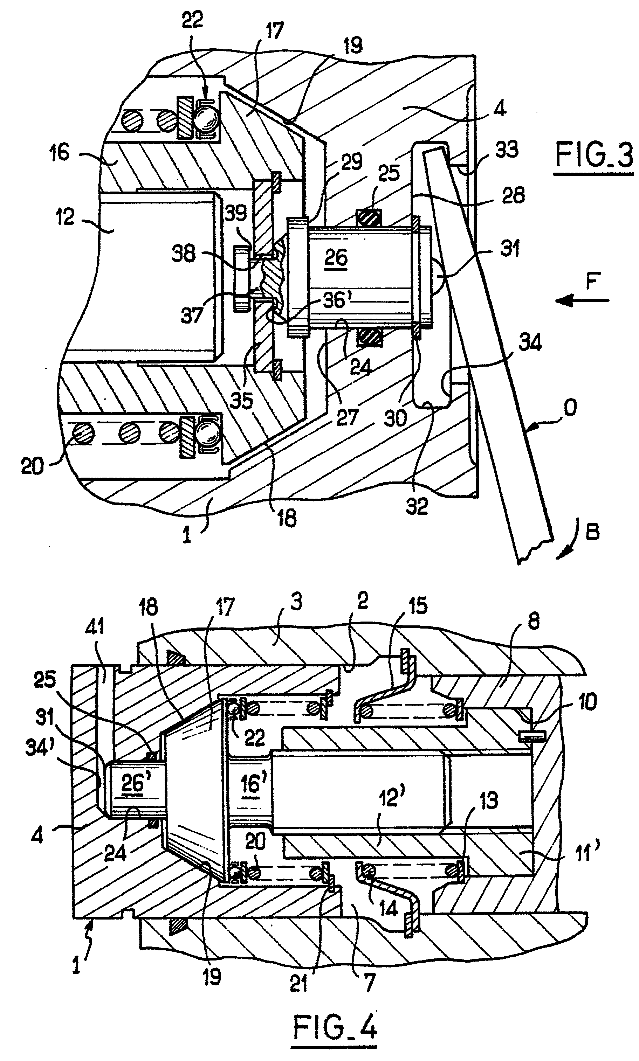

Le mode de réalisation des figures 2 et 3 se distingue du précédent par le fait que la fonction du piston inhibiteur 23 est assurée ici par l'insert piston 26 de réinitialisation. A cet effet, celui-ci comporte, du côté intérieur, un prolongement 37 traversant un orifice central 38 formé dans la paroi 35 et terminé par une collerette ou un circlips formant une butée annulaire 39 susceptible de coopérer avec la face arrière de la paroi 35. Pour faciliter la rotation de l'écrou 16 lors de la phase de réinitialisation par poussée axiale via l'insert piston 26, celui-ci coopère avec la face antérieure de la paroi 35 par une zone de contact sensiblement linéaire formée par un bourrelet annulaire 36'. Comme dans le mode de réalisation de la figure 1, lorsque la pression dans la chambre 7 s'élève, le piston de réinitialisation 26 est repoussé vers l'avant dans la portion de passage cylindrique 24, ce déplacement vers l'avant du piston 26 étant ici exploité pour exercer, par engagement de l'épaulement 39 avec la face postérieure de la paroi 35 de l'écrou 16, une traction vers l'avant sur ce dernier tendant à plaquer l'une contre l'autre les faces 18 et 19, sans que la surface annulaire de butée 29 ne vienne en appui contre la face interne 27 de la paroi 4 du piston 1, de façon à interdire donc, audessus d'un niveau de pression déterminé, une séparation entre ces deux faces susceptibles de permettre à l'écrou 16 de tourner pour effectuer un réglage automatique, le déplacement, dans ce cas, du piston de frein 1 étant accompagné par un déplacement concomitant de l'ensemble de l'écrou 16 et de la vis 12 à l'encontre du ressort de rappel 14. Comme représenté sur la figure 2, un capuchon protecteur amovible en matériau souple 40 est avantageusement monté dans la rainure annulaire 32 pour protéger de toute contamination le piston 26.

On va maintenant décrire, en relation avec la figure 3, le mode opératoire de réinitialisation du dispositif de réglage automatique du moteur de frein selon l'invention permettant le remplacement d'un organe de friction usé 5 par un organe de friction neuf. Lorsque l'organe de friction 5 est usé, le piston 1 a avancé d'une certaine quantité vers l'avant dans l'alésage 2 sous l'effet du dévissage progressif compensateur d'usure de l'écrou 16 sur la vis 12. Il importe donc, pour remettre en place un organe de friction neuf, de reculer dans l'alésage 2 l'ensemble du piston 1 et de l'écrou 16. Pour ce faire, on ôte le capuchon 40 afin de découvrir la rainure annulaire 32. On introduit alors transversalement un outil d'actionnement O présentant une tête effilée dans la configuration représentée sur la figure 3, c'est à dire avec l'extrémité de l'outil O engagée dans la rainure 32 et une portion adjacente de cette extrémité en contact avec la tête d'extrémité 31 du piston 26. En exerçant sur l'outil O un couple de basculement dans le sens de la flèche B, l'extrémité de l'outil O prend appui sur la face de contreappui 34 dans la rainure 32, la portion d'extrémité adjacente de l'outil O repoussant simultanément le piston 26 vers l'intérieur de la chambre 7 jusqu'à ce que sa zone de contact intérieure 36 ou 36' vienne en contact avec la paroi 35 de l'écrou 16. Un complément de couple de basculement B exercé sur l'outil O provoque un recul de l'ensemble piston 26/écrou 16 simultanément avec un déplacement vers l'avant du piston 1, permettant ainsi, comme représenté sur la figure 3, d'écarter l'une de l'autre les faces d'engagement 18 et 19, d'une distance correspondant à la venue en butée du circlips 30 sur la face externe 28 de la paroi 4 du piston 1. Dans la configuration ainsi atteinte sur la figure 3, un complément d'effort axial exercé par l'outil O, via le piston 26, sur l'écrou 16, permet à celui-ci de tourner sur la vis 12 et donc de se revisser sur cette dernière, un effort de translation F exercé sur l'outil O permettant alors de ramener l'écrou 16 et le piston 1 dans la position initiale représentée sur les figures 1 et 2, après quoi l'outil O est simplement extrait et le capuchon 40 remis en place. En variante, comme représenté sur la Figure 5, le capuchon 40 est annulaire et est monté, par sa périphérie, avec un jeu axial important dans la rainure annulaire 32 formant l'épaulement de contre-appui 34, et par sa zone centrale dans une gorge annulaire 41 dans l'extrémité extérieure de l'insert piston 26, en laissant donc l'extrémité 31 de ce dernier exposée à l'extérieur. Comme illustré sur la Figure 5, cette variante permet l'insertion en position d'actionnement de l'outil O sans devoir démonter le capuchon 40.

Le mode de la réalisation de la figure 4 diffère de ceux précédemment décrits essentiellement par le fait que l'organe rotatif du dispositif de réglage automatique est ici constitué par une vis 16' présentant la partie d'extrémité de diamètre extérieur élargi 17 coopérant en engagement de friction avec la face interne 18 du piston 1, la vis 16' coopérant avec un écrou immobilisé en rotation 12' comportant une extrémité 11' reçue dans le logement 10 du piston poussoir 8 de la même façon que la vis 12 dans les modes de réalisation précédents. Dans le mode de réalisation de la figure 4, la portion de passage cylindrique 24 ne débouche pas axialement vers l'extérieur dans la paroi frontale 4 du piston 1 mais se prolonge latéralement par au moins une portion de passage transversale 41 s'étendant sensiblement radialement et permettant l'introduction transversale de l'outil d'actionnement O pour coopérer avec l'extrémité extérieure arrondie de l'insert piston de réinitialisation 26', la face de contre appui 34' pour l'extrémité de l'outil d'actionnement étant ici constituée par la paroi du passage transversal 41 en vis-à-vis de l'extrémité extérieure du piston 26'. Dans le mode de réalisation de la figure 4, le piston 26' peut être formé d'une seule pièce avec la vis 16', assurant ainsi la fonction de piston inhibiteur de réglage automatique de la même façon que le piston 26 du mode de réalisation des figures 2 et 3.

Dans les différents modes de réalisation décrits cidessus, la fonction frein de parking est assurée en mettant en oeuvre l'actionneur mécanique 9 pour repousser vers l'avant le piston poussoir 8 et, via le dispositif de réglage automatique 12,16 ou 12', 16', le piston de frein 1 et plaquer ainsi en engagement de friction l'organe de friction 5 contre le disque 6.

Bien que la présente invention ait été décrite en relation avec des modes de réalisation particuliers, elle ne s'en trouve pas limitée mais est au contraire susceptible de modifications et de variantes qui apparaîtront à l'homme de l'art.

**Revendications**

1. Moteur de frein, comprenant : un piston de frein (1) coulissant dans un corps (3) pour l'actionnement d'au moins un organe de friction (5) ; un dispositif de réglage automatique du type à vis/écrou à pas réversible comportant un organe non rotatif (12; 12′) associé à un organe rotatif (16 ; 16′) accompagnant, en fonctionnement, le déplacement axial du piston de frein pour le rattrapage des jeux résultant de l'usure de l'organe de friction, l'organe rotatif comportant une extrémité (17) s'étendant dans le piston de frein au voisinage d'une paroi frontale (4) de celui-ci coopérant avec l'organe de friction (5) et étant accouplable, pour être immobilisé en rotation, au piston de frein par un moyen d'embrayage (18-19,20), et un insert (26 ; 26′) monté de façon étanche dans un passage traversant (24) formé dans la paroi frontale (4), l'insert ayant une extrémité extérieure (31) et une extrémité intérieure (36 ; 36′) susceptible de coopérer avec ladite extrémité (17) de l'organe rotatif (16 ; 16′) pour solliciter axialement ce dernier afin de réinitialiser le dispositif de réglage automatique en réponse à un effort axial et appliqué sur l'extrémité extérieure de l'insert, caractérisé en ce que l'insert est constitué sous la forme d'un piston (26 ; 26′) coulissant dans une portion cylindrique (24) du passage et présente une extrémité extérieure formant une tête arrondie (31), le passage formant, dans la paroi du piston de frein, du côté de l'organe de friction (5), une surface de contre-appui (34 ; 34′) faisant face vers la portion de passage cylindrique (24).

2. Moteur de frein selon la revendication 1, caractérisé en ce que la surface de contre appui (34) est formée par une gorge annulaire de diamètre élargi (32) dans laquelle débouche la portion de passage cylindrique (24).

3. Moteur de frein selon la revendication 2, caractérisé en ce qu'il comprend un capuchon protecteur (40) monté dans la gorge annulaire (32).

4. Moteur de frein selon la revendication 1, caractérisé en ce que la surface de contre appui (34′) est formée par au moins une portion de passage (41) s'étendant transversalement dans la paroi (4) du piston de frein (1).

5. Moteur de frein selon l'une des revendications 1 à 4, caractérisé en ce qu'il comprend des moyens (30; 28) sur l'insert piston (26 ; 26′) et la paroi frontale (4) du piston de frein (1) coopérant pour limiter le déplacement axial de l'insert piston dans la portion de passage cylindrique (24) au moins dans la direction vers l'intérieur du piston de frein (1).

6. Moteur de frein selon l'une des revendications précédentes, caractérisé en ce qu'il comprend en outre des moyens (23 ; 26-38 ; 26′) d'inhibition du dispositif de réglage automatique lorsque la pression d'actionnement du piston de frein (1) dépasse une valeur déterminée.

7. Moteur de frein selon la revendication 6, caractérisé en ce que les moyens d'inhibition comportent un piston inhibiteur (23 ; 26 ; 26′) monté coulissant dans le piston de frein (1) et coopérant avec l'organe rotatif (16 ; 16') pour en empêcher la rotation lors d'un déplacement fonctionnel du piston de frein (1).

8. Moteur de frein selon la revendication 7, caractérisé en ce que le piston inhibiteur est constitué par l'insert piston (26).

9. Moteur de frein selon la revendication 8, caractérisé en ce que l'insert piston (26) comporte une extrémité intérieure (37) traversant une paroi frontale d'extrémité (35) de l'organe rotatif (16) et comportant deux surfaces en vis-à-vis (39, 36′) susceptibles de coopérer avec les faces axialement opposées de la paroi frontale d'extrémité (35).

10. Moteur de frein selon la revendication 9, caractérisé en ce que l'insert piston (26′) est formé d'une seule pièce avec l'organe rotatif (16′).

11. Moteur de frein selon l'une des revendications précédentes, caractérisé en ce qu'il comporte en outre une commande mécanique (9,8) couplée à l'organe non rotatif (12 ; 12′) du dispositif de réglage automatique et agissant sur le piston de frein (1) par l'intermédiaire du dispositif de réglage automatique.

**Patentansprüche**

1. Bremsantrieb, mit: einem Bremskolben (1), der in einem Körper (3) zur Betätigung von wenigstens einem Reibungselement (5) gleitet; einer Vorrichtung zur automatischen Nachstellung vom Typ mit Schraube/Schraubenmutter und umkehrbarer Steigung, die ein einem drehbaren Element (16; 16′) zugeordnetes drehfestes Element (12; 12′) umfaßt, wobei dieses drehbare Element im Betrieb die axiale Verschiebung des Bremskolbens für den Verschleißausgleich begleitet, der von dem Verschleiß des Reibungselements verursacht wird, sowie ein Endstück (17) aufweist, das sich in dem Bremskolben in der Nähe einer Stirnwand (4) desselben erstreckt, die mit dem Reibungselement (5) zusammenwirkt und, um drehfest festgehalten zu sein, durch eine Kupplungseinrichtung (18–19, 20) an den Bremskolben angekoppelt werden kann; mit einem Einsatz (26, 26′), der in einem in der Stirnwand (4) gebildeten durchquerenden Durchgang (24) abgedichtet gelagert ist, wobei der Einsatz einen Außenendteil (31) sowie einen Innenendteil (36, 36′) aufweist, der mit dem Endteil (17) des drehbaren Elementes (16; 16′) zusammenwirken kann, um dieses axial zu beaufschlagen, um die Vorrichtung zur automatischen Regelung neu zu initialisieren, als Antwort auf eine axiale, auf den Außenendteil des Einsatzes angelegte Beanspruchung, dadurch gekennzeichnet, daß der Einsatz in Form eines Kolbens (26; 26′) ausgebildet ist, der in einem zylindrischen Abschnitt (24) des Durchganges gleitet und einen einen abgerundeten Kopf bildenden Außenendteil (31) aufweist, wobei der Durchgang in der Wand des Bremskolbens und auf der Seite des Reibungselementes (5) eine Gegenabstützfläche (34; 34′) bildet, die dem Abschnitt des zylindrischen Durchgangs (24) gegenüberliegt.

2. Bremsantrieb nach Anspruch 1, dadurch gekennzeichnet, daß die Gegenabstützfläche (34) durch eine ringförmige Nut (32) eines eweiterten Umfangs, in welche der Abschnitt des zylindrischen Durchgangs (24) mündet, gebildet ist.

3. Bremsantrieb nach Anspruch 2, dadurch gekennzeichnet, daß er eine Schutzkappe (40) umfaßt, die in der ringförmigen Nut (32) angebracht ist.

4. Bremsantrieb nach Anspruch 1, dadurch gekennzeichnet, daß die Gegenabstützfläche (34′) durch wenigstens einen Durchgangsabschnitt (41), der sich in der Wand (4) des Bremskolbens (1) quer erstreckt, gebildet ist.

5. Bremsantrieb nach einem der Ansprüche 1 bis 4, dadurch gekennzeichnet, daß er Mittel (30; 28) auf dem Kolbeneinsatz (26; 26') sowie auf der Stirnwand (4) des Bremskolbens (1) umfaßt, die zusammenwirken, um die axiale Verschiebung des Kolbeneinsatzes in dem Abschnitt des zylindrischen Durchgangs (24) wenigstens in Richtung zum Inneren des Bremskolbens (1) hin zu begrenzen.

6. Bremsantrieb nach einem der vorstehenden Ansprüche, dadurch gekennzeichnet, daß er ferner Mittel (23; 26–38; 26') zur Sperrung der Vorrichtung zur automatischen Nachstellung, wenn der Druck zur Betätigung des Bremskolbens (1) einen bestimmten Wert überschreitet, umfaßt.

7. Bremsantrieb nach Anspruch 6, dadurch gekennzeichnet, daß die Sperrmittel einen Sperrkolben (23; 26; 26') umfassen, der in dem Bremskolben (1) gleitend gelagert ist und mit dem drehbaren Element (16; 16') zusammenwirkt, um dessen Rotation während einer funktionellen Verschiebung des Bremskolbens (1) zu verhindern.

8. Bremsantrieb nach Anspruch 7, dadurch gekennzeichnet, daß der Sperrkolben aus dem Kolbeneinsatz (26) besteht.

9. Bremsantrieb nach Anspruch 8, dadurch gekennzeichnet, daß der Kolbeneinsatz (26) ein Innenendstück (37) umfaßt, das eine Endstirnwand (35) des drehbaren Elementes (16) durchquert und zwei sich gegenüberliegende Flächen (39, 36') aufweist, die mit den voneinander axial abgewandten Flächen der Endstirnwand (35) zusammenwirken können.

10. Bremsantrieb nach Anspruch 9, dadurch gekennzeichnet, daß der Kolbeneinsatz (26') einstückig mit dem drehbaren Element (16') ausgebildet ist.

11. Bremsantrieb nach einem der vorstehenden Ansprüche, dadurch gekennzeichnet, daß er ferner eine mechanische Steuerung (9, 8) umfaßt, die an das drehfeste Element (12; 12') der Vorrichtung zur automatischen Nachstellung angekoppelt ist und über die Vorrichtung zur automatischen Nachstellung auf den Bremskolben (1) einwirkt.

**Claims**

1. Brake motor, comprising a brake piston (1) sliding in a body (3) to operate at least one friction member (5); an automatic adjustment device of the reversing thread screw/nut type comprising a non-rotating member (12; 12') associated with a rotating member (16; 16') accompanying, in operation, the axial movement of the brake piston to take up play resulting from wear in the friction member, the rotating member having an end (17) extending into the brake piston near a front wall (4) of the latter working together with the friction member (5) and being connectable, to be locked in rotation, to the brake piston by a clutch means (18–19, 20) and an insert (26; 26') mounted sealingly in a through passage (24) formed in the front wall (4), the insert having an outer end (31) and an inner end (36; 36') able to work with the said end (17) of the rotating member (16; 16') to move this latter axially so as to reset the automatic adjustment device in answer to an axial load applied to the outer end of the insert, characterized in that the insert is made in the shape of a piston (26; 26') sliding in a cylindrical part (24) of the passage and has an outer end in the shape of a round head (31), the passage forming, in the wall of the brake piston at the friction member end (5), a counter-bearing surface (34; 34') opposite the cylindrical part of the passage (24).

2. Brake motor according to Claim 1, characterized in that the counter-bearing surface (34) is formed by an annular groove of enlarged diameter (32) in which the cylindrical part of the passage (24) emerges.

3. Brake motor according to Claim 2, characterized in that it comprises a protective cover (40) fitted in the annular groove (32).

4. Brake motor according to Claim 1, characterized in that the counter-bearing surface (34') is formed at least by a part of the passage (41) extending transversely in the wall (4) of the brake piston (1).

5. Brake motor according to any of Claims 1 to 4, characterized in that it comprises means (30–28) on the inserted piston (26; 26') and the front wall (4) of the brake piston (1) cooperating to limit the axial movement of the inserted piston in the cylindrical part of the passage (24) at least in the direction towards the inside of the brake piston (1).

6. Brake motor according to any of the preceding claims, characterized in that it comprises as well means (23; 26–38; 26') of inhibition of the automatic adjustment device when the operating pressure of the brake piston (1) exceeds a preset value.

7. Brake motor according to Claim 6, characterized in that the means of inhibiting comprise an inhibiting piston (23; 26; 26') slideably mounted in the brake piston (1) and working together with the rotating member (16, 16') to prevent it rotating during an operational movement of the brake piston (1).

8. Brake motor according to Claim 7, characterized in that the inhibiting piston consists of the inserted piston (26).

9. Brake motor according to Claim 8, characterized in that the inserted piston (26) has an inner end (37) passing through a front end plate (35) of the rotating member (16) and comprising two opposite surfaces (39; 36') able to work together with the axially opposing faces of the front end plate (35).

10. Brake motor according to Claim 9, characterized in that the inserted piston (26') is made in one piece with the rotating member (16').

11. Brake motor according to any of the preceding claims, characterized in that it comprises as well a mechanical control (9, 8) connected to the non-rotating member (12; 12') of the automatic adjustment device and acting on the brake piston (1) via the automatic adjustment device.

FIG_1

EP 0 249 522 B1

FIG.2

FIG.5

EP 0 249 522 B1

FIG.3

FIG.4